# EUROPÄISCHE PATENTSCHRIFT

(11) **EP 3 469 687 B1**
(45) Veröffentlichungstag und Bekanntmachung des Hinweises auf die Patenterteilung: **12.07.2023**
(21) Anmeldenummer: 17723698.1
(22) Anmeldetag: 16.05.2017
(51) Int. Cl.: H02K 3/18, H02K 3/12, H02K 7/18, H02K 15/00

(54) **WICKLUNG EINES GENERATORS EINER WINDENERGIEANLAGE SOWIE VERFAHREN ZUM VERBINDEN VON FLACHBANDLEITERN**
WINDING OF A GENERATOR OF A WIND POWER INSTALLATION, AND METHOD FOR CONNECTING FLAT RIBBON CONDUCTORS
ENROULEMENT D'UN GÉNÉRATEUR D'UNE ÉOLIENNE ET PROCÉDÉ DE RACCORDEMENT DE CONDUCTEURS PLATS

(30) Priorität: 08.06.2016 DE 102016110533
(43) Veröffentlichungstag der Anmeldung: 17.04.2019
(73) Patentinhaber: Wobben Properties GmbH, 26607 Aurich (DE)
(72) Erfinder: RÖER, Jochen, 27777 Ganderkesee (DE); MÖHLMANN, Gerald, 26817 Rhauderfehn (DE)
(74) Vertreter: Eisenführ Speiser
(86) Internationale Anmeldenummer: PCT/EP2017/061688
(87) Internationale Veröffentlichungsnummer: WO 2017/211549

(56) Entgegenhaltungen:
- EP-A1- 2 383 868
- WO-A1-2009/126981
- DE-A1- 10 116 831
- DE-A1-102012 208 550
- DE-A1-102014 216 210

## Beschreibung

Die Erfindung betrifft die Wicklung eines Generators einer Windenergieanlage und ein Verfahren zum Herstellen von Verbindungen von Flachbandleitungen, die vorzugsweise für die Wicklung verwendet werden.

Gemäß dem Stand der Technik sind Windenergieanlagen, insbesondere auch getriebelose Windenergieanlagen, bekannt. Windenergieanlagen werden durch einen aerodynamischen Rotor angetrieben, der unmittelbar mit einem Läufer eines Generators verbunden ist. Durch die Bewegung des Läufers im Generator wird die aus dem Wind gewonnene Bewegungsenergie in elektrische Energie umgewandelt. Der Läufer des Generators dreht sich demnach mit der gleichen langsamen Drehgeschwindigkeit wie der aerodynamische Rotor.

Zur Berücksichtigung einer solchen langsamen Drehzahl weist der Generator einen, bezogen auf die Nennleistung, verhältnismäßig großen Generatordurchmesser, vorzugsweise von mehreren Metern, mit einem großen Luftspaltdurchmesser auf. Der Luftspalt ist auf der Läuferseite durch Läuferpole mit Polpaketen begrenzt. Die Polpakete bestehen aus einem Materialblock oder aus einer Vielzahl von gestanzten Polpaketblechen, die aufeinander geschichtet und beispielsweise miteinander zu den Polpaketen verschweißt sind.

Gemäß dem Stand der Technik weisen die Polpaketbleche der Polpakete einen Polschaftbereich und einen Polkopfbereich auf. Die Polpakete werden mit einer Wicklung, die auch Läuferwicklung genannt werden kann, versehen und dieser Wicklung ein elektrischer Erregerstrom zugeführt. Dadurch wird mit den Polpaketen und den entsprechenden Wicklungen zusammen mit dem Erregerstrom eine magnetische Erregung erzeugt. Diese magnetische Erregung führt dazu, dass die Polpakete mit der Wicklung als magnetische Pole des Läufers des Generators, insbesondere eines Synchrongenerators, dienen.

Bei der Fertigung werden um den Polschaft jedes Polpakets mehrere Windungen, vorzugsweise aus Aluminiumflachdraht oder Kupferflachdraht, gewickelt und bilden dadurch eine Spule. Die Enden mehrerer Spulen werden untereinander verbunden, um entsprechende Pole des Generators durch gleichzeitiges Bestromen zu erzeugen. Leitungen aus Aluminiumflachdraht oder Kupferflachdraht können auch allgemein unter den Begriff Flachbandleiter oder Flachdrahtleiter zusammengefasst werden.

Neben der Polwicklung aus Flachdraht gibt es auch Wicklungen aus Flachband. Für die Verbindung von Flachbandspulen wird standardmäßig das Kaltpressschweißverfahren angewendet.

Das heißt, der Flachbandleiter, der im gewickelten Zustand die Spule, die auch Flachbandspule genannt werden kann, ergibt, wird über seine gesamte Breite mit einem Flachstab in Verbindung gebracht und durch Kaltpressschweißen mit dem Stab an mehreren Stellen verbunden. Mehrere Verbindungen pro Ende einer Flachbandspule sind nötig, um einen ausreichend geringen Widerstand der Verbindung zu gewährleisten, sodass im Verbindungsbereich keine übermäßige Hitze entsteht, die die Verbindung zerstört.

Kaltpressschweißverbindungen erfolgen unter hohem Druck und unterhalb der Kristallisationstemperatur der Einzelteile. Somit ist diese Methode des Verbindens besonders vorteilhaft, da keine hohen Temperaturen nötig sind, um - wie zum Beispiel beim Schweißen - eine formschlüssige Verbindung herzustellen.

Die Qualität der Kontaktierung ist jedoch von der Sorgfalt der Vorbehandlung der Kontaktstellen abhängig und es ist somit eine aufwändige Vorbereitung für die Verbindung nötig. Außerdem ist eine unmittelbare Prüfung der Qualität der Kontaktierung nach dem Herstellen nötig, da die Kontaktierung bei einer durch Kaltpressschweißen hergestellten Verbindung verhältnismäßig häufig nicht in ausreichender Qualität hergestellt wurde. Ein Nachbessern im Falle einer schlechten Kontaktierung beispielsweise nach einem kompletten Herstellen eines Generators gestaltet sich sehr schwierig. Beispielsweise wird der Spulenanfang beim Wickeln von einer nachfolgenden Wicklung verdeckt und ist für eine spätere Kontrolle daher nicht mehr zugänglich.

Schweißverbindungen, bei denen hohe Hitze benötigt wird, die schwierig auf einen vordefinierten Verbindungsbereich begrenzbar ist, sind zum Verbinden der Flachbandleitungen oder Spulen aus Flachband nicht geeignet, da die Wärmeentwicklung beispielsweise zur Zerstörung von Bauteilen, die im umliegenden Bereich eines Verbindungsbereichs liegen, führen kann.

Aufgabe der vorliegenden Erfindung ist es daher, die Nachteile des Standes der Technik auszuräumen. Insbesondere soll eine Möglichkeit einer Verbindung zweier Flachbandleitungen gefunden werden, die eine hohe Qualität aufweist, die mit weniger Vorarbeiten erreicht werden kann und die ohne ein Erhitzen mit einem Verbrennungsgas, wie beispielsweise beim Schweißen, erzeugbar ist.

Das Deutsche Patent- und Markenamt hat in der Prioritätsanmeldung zu vorliegender Anmeldung den folgenden Stand der Technik recherchiert: DE 41 26 019 A1, DE 10 2012 208 550 A1, AT 84635 B, US 3,467,931 A und EP 2 863 402 A1. Weiterer Stand der Technik ist in DE 10 2012 208550 A1, DE 101 16 831 A1, DE 10 2014 216210 A1 und WO 2009/126981 A1 offenbart. EP 2 383 868 A1 offenbart eine Wicklung gemäß dem Oberbegriff der Erfindung.

Erfindungsgemäß wird eine Wicklung eines Generators einer Windenergieanlage vorgeschlagen, die mit Flachbandspulen aus Flachbandleitungen hergestellt ist. Die Wicklung ist vorzugsweise die Wicklung des elektrischen Läufers, der auch Rotor genannt wird, des Generators. Jeder der Flachbandleiter, der zu einer Flachbandspule gewickelt ist, weist zwei Enden auf. Der Flachbandleiter erstreckt sich in einer Länge, ist vorzugsweise aus Kupfer oder Aluminium und weist einen Querschnitt auf. Der Querschnitt des Flachbandleiters weist hierbei eine Höhe auf, die wesentlich geringer als die Breite ist. So entspricht die Breite vorzugsweise mindestens der zehnfachen Höhe.

Mindestens zwei Enden zweier unterschiedlicher Flachbandleiter sind ferner verbunden. Hierzu sind die Enden jeweils vom jeweiligen Ende aus gesehen mindestens bis zu einer vordefinierten Länge in Längsrichtung eingeschnitten oder gestanzt, sodass mindestens zwei Teilendstücke des Flachbandleiters am Ende des Flachbandleiters entstehen. Die Teilendstücke weisen jeweils eine im Wesentlichen gleiche Breite auf. Außerdem sind die Teilendstücke derart gebogen, dass sich die Teilendstücke zumindest in einem Verbindungsbereich überlappen. In den überlappenden Verbindungsbereichen beider Enden, die in einem gemeinsamen Verbindungsbereich überlappend angeordnet sind, ist ein Durchbruch durch alle Teilendstücke beider Verbindungsbereiche der beiden Enden vorgesehen, wobei die Teilendstücke beider Enden, mittels des Durchbruchs, in gemeinsamen Verbindungsbereichen miteinander verbunden sind.

Demnach lassen sich die Verbindungsbereiche der Enden durch einen einzigen gemeinsamen Verbindungsbereich, zum Beispiel mit dem Durchbruch, der vernietet, verschraubt oder in sonstiger Weise für eine Verbindung verwendet werden kann, verbinden. Ein ausreichend geringer Widerstand durch ein Überlappen und Berühren der Teilendstücke im gemeinsamen Verbindungsbereich ist außerdem gewährleistet. Somit ist ein mehrfaches Verbinden, wie beim Kaltpressschweißen, nicht nötig.

Gemäß einer ersten Ausführungsform sind die Teilendstücke des ersten Endes eines Flachbandleiters und die Teilendstücke des zweiten Endes eines zweiten Flachbandleiters im gemeinsamen Verbindungsbereich überlappend angeordnet, sodass jeweils zwischen zwei Teilendstücken des ersten Endes ein Teilendstück des anderen Endes angeordnet ist.

Somit ist eine besonders vorteilhafte elektrische Leitung mit einem geringen Widerstand vom einen Ende eines Flachbandleiters zum anderen Ende eines anderen Flachbandleiters möglich. Der Kontaktbereich ist durch die abwechselnd angeordneten Teilendstücke unterschiedlicher Enden, also die gestapelte Anordnung, möglichst groß gewählt.

Gemäß einer weiteren Ausführungsform sind alle Teilendstücke gebogen, sodass sich die Teilendstücke in einem Verbindungsbereich überlappen, indem jedes Teilendstück einen Biegewinkel von 180 Grad aufweist. Hierbei weist die Biegelinie einen Winkel größer Null gegenüber der Längsachse auf, sodass sich der Verbindungsbereich seitlich neben dem Flachbandleiter befindet. Die Teilendstücke werden also seitlich umgeklappt. Durch diese Biegung der Teilendstücke ist in besonders einfacher Weise, nämlich durch schräges Umklappen der Teilendstücke ein Verbindungsbereich erzeugt worden. Ein Biegewinkel von 180 Grad ist einfach und genau herstellbar.

Gemäß einer weiteren Ausführungsform weist die Biegelinie der Teilendstücke einen 45-Grad-Winkel zu einer Längsachse der Teilendstücke auf, sodass die Teilendstücke in einem 90-Grad-Winkel verlaufen, also die Längsachse der Teilendstücke jeweils einen rechtwinkligen Verlauf aufweist, und in einem Biegewinkel von 180 Grad gebogen sind. Insbesondere zum Verbinden benachbarter Flachbandleiter lassen sich somit durch Erzeugen der gemeinsamen Verbindungsbereiche zwischen den benachbarten Flachbandleitern Verbindungen erzeugen, ohne weitere Materialien, wie die gemäß dem Stand der Technik verwendeten Stäbe oder Verbindungsstäbe, zu verwenden. Demnach ersetzen die Teilendstücke selbst die Verbindungsstäbe. Im Übrigen ist die Verbindung von zwei Flachbandleiterenden und damit die Verbindung von zwei benachbarten Spulen somit durch Herstellen einer einzigen Verbindung möglich.

Gemäß einer weiteren Ausführungsform ist ein Durchbruch durch die Teilendstücke im gemeinsamen Verbindungsbereich durch Bohren oder Stanzen hergestellt. Die Teilendstücke beider Enden sind dann mit einer Schraube durch den gemeinsamen Durchbruch verschraubt.

Gemäß einer alternativen Ausführungsform der zuletzt genannten Ausführungsform ist der Durchbruch erzeugt worden, indem die Teilendstücke im Verbindungsbereich zumindest teilweise in Berührung miteinander gebracht wurden und ein rotierendes schneidloses Werkzeug im Verbindungsbereich durch die zu verbindenden Werkstücke während der Rotation in axialer Richtung vorgeschoben wurde.

Zum Erzeugen des Durchbruchs wurde ein schneidloser Bohrer verwendet, der vorzugsweise ein Fließbohrer ist. Durch Reibung in Kontakt mit den Teilendstücken verflüssigt das Werkzeug das Material der Teilendstücke, sodass sich diese nach Entfernen des Werkzeugs aus dem Durchbruch beim Erstarren des Materials der Teilendstücke miteinander verbinden.

Eine derartige Verbindung hat den Vorteil, dass die benötigte Wärme zum Aufschmelzen des Materials der Teilendstücke, also des Aluminiums und/oder Kupfers, direkt im Verbindungsbereich durch die Reibung erzeugt wird. Somit werden benachbarte Komponenten nicht durch eine Flamme, wie sie beispielsweise beim Schweißen benötigt wird, in Mitleidenschaft gezogen. Dadurch muss zur Verbindung kein herkömmliches Schweißverfahren, zum Beispiel Schutzgasschweißverfahren, angewendet werden.

Ferner betrifft die Erfindung ein Verfahren zum Verbinden von Flachbandleitern, wobei zwei Enden zweier Flachbandleiter durch die folgenden Schritte verbunden werden. Vorzugsweise sind die Flachbandleiter zuvor um die Rotorpolschafte eines Rotors einer Windenergieanlage gewickelt worden. Zunächst wird jeder Flachbandleiter jeweils am Ende bis zu mindestens einer vordefinierten Länge in Längsrichtung des Leiters ein- oder mehrfach eingeschnitten, sodass mindestens zwei, vorzugsweise mindestens sechs oder mindestens acht, Teilendstücke mit jeweils einer im Wesentlichen gleichen Breite entstehen. Die Teilendstücke weisen demnach die gleiche Dicke wie der Flachbandleiter selbst auf. Daraufhin werden die Teilendstücke derart gebogen, dass sich diese zumindest in einem Verbindungsbereich wechselseitig überlappen. Demnach weist jeder Flachbandleiter einen Verbindungsbereich auf. Die Verbindungsbereiche zweier Flachbandleiter werden dann in einem gemeinsamen Verbindungsbereich überlappend angeordnet. Im gemeinsamen Verbindungsbereich wird dann ein Durchbruch hergestellt, der durch alle Teilendstücke beider Enden hindurch führt. Der Durchbruch dient zum Verbinden der Teilendstücke.

Gemäß einer Ausführungsform des Verfahrens wird der Durchbruch erzeugt, indem ein schneidloses rotierendes Werkzeug durch alle Teilendstücke vorgeschoben wird, während sich das Material der Teilendstücke durch die Reibung zwischen dem Material der Teilendstücke und dem Werkzeug verflüssigt. Durch Erstarren nach Entfernen des Werkzeugs entsteht eine stoffschlüssige Verbindung.

Weitere Ausführungsformen ergeben sich anhand der in den Figuren näher erläuterten Ausführungsbeispiele. Hierbei zeigen:
- Fig. 1: eine Windenergieanlage,
- Fig. 2: eine schematische Seitenansicht eines Generators,
- Fig. 3: eine Flachbandleitung, die mit kaltverschweißten Flachstäben verbunden ist (Stand der Technik),
- Fig. 4: eine Flachbandleitung mit umgebogenen Teilendstücken,
- Fig. 5: zwei Flachbandleitungen mit verbundenen Enden und
- Fig. 6: einen Durchbruch im gemeinsamen Verbindungsbereich, mit dem die Teilendstücke zweier Enden verbunden sind.

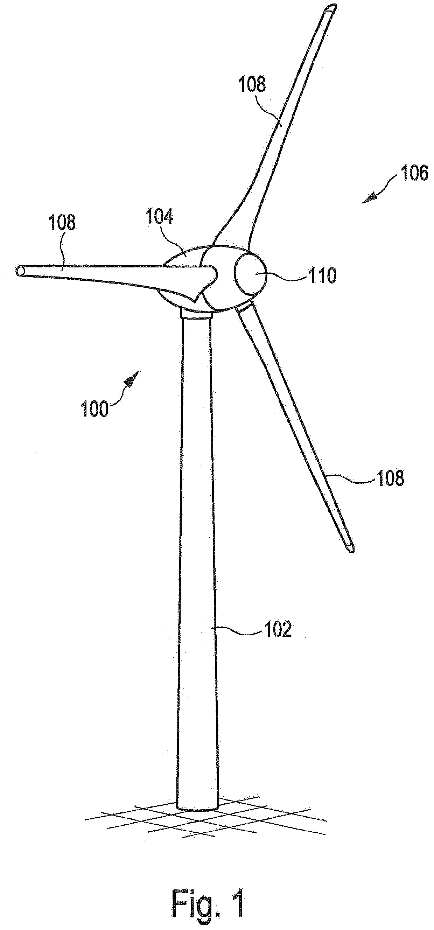

Fig. 1 zeigt eine schematische Darstellung einer Windenergieanlage 100 gemäß der Erfindung. Die Windenergieanlage 100 weist einen Turm 102 und eine Gondel 104 auf dem Turm 102 auf. An der Gondel 104 ist ein aerodynamischer Rotor 106 mit drei Rotorblättern 108 und einem Spinner 110 vorgesehen. Der aerodynamische Rotor 106 wird im Betrieb der Windenergieanlage durch den Wind in eine Drehbewegung versetzt und dreht somit auch einen Rotor oder Läufer eines Generators, welcher direkt oder indirekt mit dem aerodynamischen Rotor 106 gekoppelt ist. Der elektrische Generator ist in der Gondel 104 angeordnet und erzeugt elektrische Energie. Die Pitchwinkel der Rotorblätter 108 können durch Pitchmotoren an den Rotorblattwurzeln 108b der jeweiligen Rotorblätter 108 verändert werden.

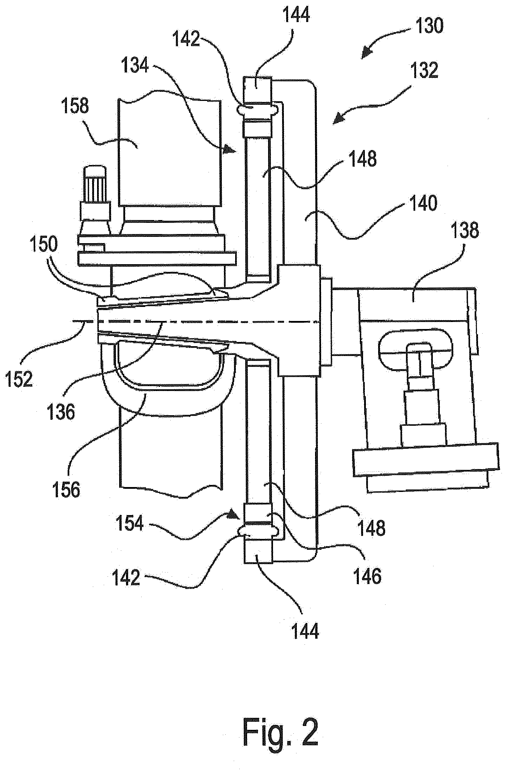

Fig. 2 zeigt einen Generator 130 schematisch in einer Seitenansicht. Er weist einen Stator 132 und einen dazu drehbar gelagerten elektrodynamischen Läufer 134 auf und ist mit seinem Stator 132 über einen Achszapfen 136 an einem Maschinenträger 138 befestigt. Der Stator 132 weist einen Statorträger 140 und Statorblechpakete 142 auf, die Statorpole des Generators 130 bilden und über einen Statorring 144 an dem Statorträger 140 befestigt sind.

Der elektrodynamische Läufer 134 weist Läuferpole 146 auf, die über einen Rotorträger 148, der auch Joch oder Läuferjoch genannt werden kann, und Lager 150 auf dem Achszapfen 136 drehbar um die Drehachse 152 gelagert sind. Die Statorblechpakete 142 und Läuferpole 146 trennt nur ein schmaler Luftspalt 154, der wenige Millimeter dick ist, insbesondere weniger als 6 mm, aber einen Durchmesser von mehreren Metern aufweist, insbesondere mehr als 4 m.

Die Statorblechpakete 142 und die Läuferpole 146 bilden jeweils einen Ring und sind zusammen auch ringförmig, so dass der Generator 130 ein Ringgenerator ist. Bestimmungsgemäß dreht sich der elektrodynamische Rotor oder Läufer 134 des Generators 130 zusammen mit der Rotornabe 156 des aerodynamischen Rotors 106, von dem Ansätze von Rotorblättern 158 angedeutet sind.

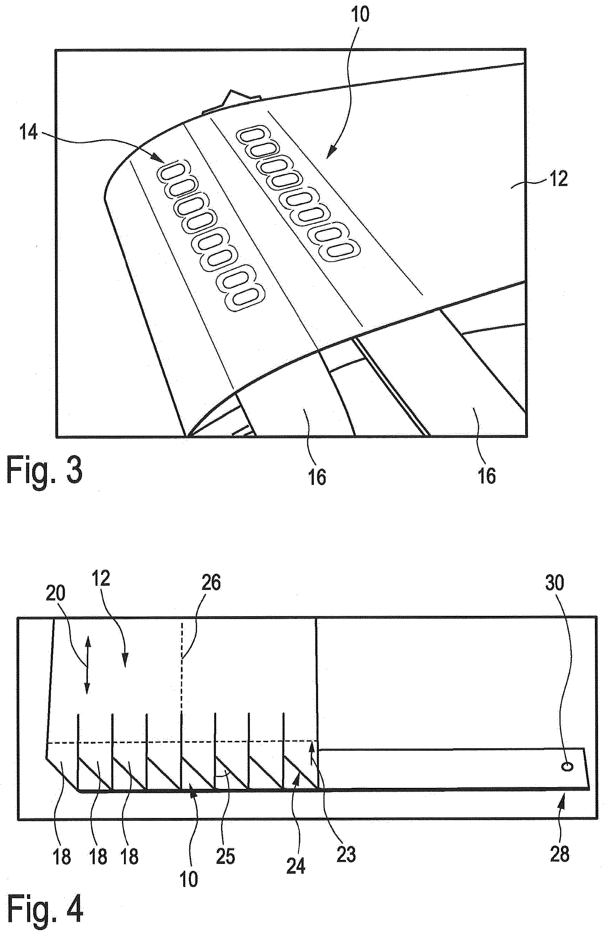

Fig. 3 zeigt ein Ende 10 eines Flachbandleiters 12, aus dem als Spule gewickelt im Läufer 134 zusammen mit weiteren als Spule gewickelten Flachbandleitern 12 die Wicklung des Läufers 134, der auch Rotor genannt wird, bildbar ist. Der Flachbandleiter 12 ist durch Kaltpressschweißen in einem Verbindungsbereich 14 mit zwei Stäben oder Flachstäben 16 verbunden. Die Flachstäbe 16 führen zu einem weiteren Ende 10 eines weiteren Flachbandleiters 12 (hier nicht dargestellt), das ebenfalls durch Kaltpressschweißen mit den Flachstäben 16 verbunden ist. Diese Verbindung ist aus dem Stand der Technik bekannt.

Fig. 4 zeigt im Gegensatz zum Stand der Technik ein Ende 10 eines Flachbandleiters 12, das gemäß der Erfindung mehrere Teilendstücke 18, nämlich genau acht Teilendstücke 18, aufweist. Die Teilendstücke 18 wurden erzeugt, indem der Flachbandleiter 12 in seiner Längsrichtung 20 mehrfach eingeschnitten wurde. Die Schnitte 22 sind zwischen den Teilendstücken 18 angeordnet und ragen mindestens bis zu einer Länge 23 des Flachbandleiters 12 vom Ende 10 aus gesehen. Vorliegend wurden sieben Schnitte oder Einschnitte 22 vorgenommen, um die acht Teilendstücke 18 zu erhalten.

Die Teilendstücke 18 wurden nun jeweils entlang einer Biegelinie 24 jeweils um 180 Grad umgebogen. Die Biegelinie 24 weist hierbei einen Winkel 25 von im Wesentlichen 45 Grad gegenüber der Längsachse 26 des Endes 10 des Leiters 12 auf. Die Teilendstücke 18 überlappen sich in einem Verbindungsbereich 28, wobei einzelne, über den Verbindungsbereich 28 hinweg ragende Teilendstücke 18 abgetrennt wurden. Im Verbindungsbereich 28 ist ein Durchbruch 30 erzeugt worden, um dem Flachbandleiter 12 mit einem weiteren Flachbandleiter 12 zu verbinden.

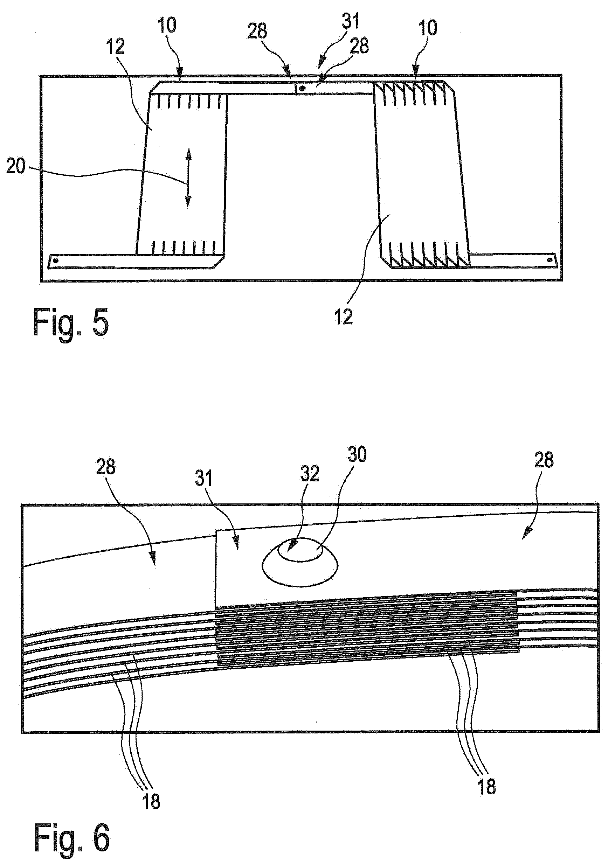

Fig. 5 zeigt zwei Flachbandleiter 12 in schematischer Darstellung, die sich in Längsrichtung 20 wesentlich weniger lang erstrecken, als die Flachbandleiter 12, die als Spule um ein Polpaket eines Läuferpols 146 gewickelt sind. Vorliegend ist die Darstellung lediglich zum schematischen Darstellen der Verbindung der Flachbandleiter 12 dargestellt. Die Flachbandleiter 12 weisen einen gemeinsamen Verbindungsbereich 31 auf, in dem diese miteinander verbunden sind. Der gemeinsame Verbindungsbereich 31 wird durch die überlappende Anordnung zweier Verbindungsbereiche 28, wie sie in Fig. 4 im Hinblick auf einen einzelnen Flachbandleiter 12 dargestellt sind, gebildet. Beide Enden 10 sind im oberen Abschnitt, so wie in Fig. 4 vergrößert dargestellt, eingeschnitten und umgebogen. Der gemeinsame Verbindungsbereich 31 ist außerdem in Fig. 6 vergrößert dargestellt.

Fig. 6 zeigt, dass die Teilendstücke 18 der jeweiligen Verbindungsbereiche 28 zweier Flachbandleiter 12 abwechselnd im gemeinsamen Verbindungsbereich 31 übereinander gestapelt sind. Die Teilendstücke 18 sind dann im gemeinsamen Verbindungsbereich 31 verbunden, indem ein Durchbruch 30, nämlich ein Loch, erzeugt wurde, indem ein rotierender schneidloser Bohrer durch alle Teilendstücke 18 im Verbindungsbereich 28 vorgeschoben wurde. Hierbei hat sich das Material der Teilendstücke 18 verflüssigt und das Material der unterschiedlichen Teilendstücke 18 ist durch das Verflüssigen ineinander geflossen. Nachdem nun der schneidlose Bohrer entfernt wurde, bleibt ein Durchbruch 30 zurück und am Rand 32 des Durchbruchs 30 sind die Teilendstücke 18 miteinander verbunden.

Zusätzlich könnte gemäß einem weiteren, hier nicht dargestellten Ausführungsbeispiel noch eine Schraube durch den Durchbruch 30 gesteckt und mit einer Mutter gesichert werden, um die hier hergestellte formschlüssige Verbindung zusätzlich noch weiter mechanisch zu sichern.

Der Generator einer Windenergieanlage weist zum Beispiel eine Nennleistung von > 1MW, einen Durchmesser von > 3m und/oder ein Gewicht von > 5t auf.

## Patentansprüche

1. Wicklung eines Generators (130) einer Windenergieanlage (100), insbesondere des Läufers (134), wobei die Wicklung mehrere Spulen umfasst, die jeweils mit einem Flachbandleiter (12) gewickelt sind, wobei die Flachbandleiter (12) jeweils zwei Enden (10) aufweisen, und mindestens zwei Enden (10) zweier Flachbandleiter (12) durch eine Verbindung miteinander verbunden sind, **gekennzeichnet dadurch, dass** die Verbindung erzeugt ist, indem die Flachbandleiter (12) jeweils vom jeweiligen Ende (10) aus gesehen mindestens bis zu einer vordefinierten Länge (23) des Flachbandleiters (12) in Längsrichtung (20) eingeschnitten oder gestanzt sind, sodass mindestens zwei Teilendstücke (18) des Flachbandleiters (12) entstehen, die jeweils eine gleiche Breite aufweisen, und die Teilendstücke (18) derart gebogen sind, dass sich die Teilendstücke (18) desselben Flachbandleiters (12) zumindest in einem Verbindungsbereich (28) überlappen, wobei sich die Verbindungsbereiche (28) der verbundenen Enden (10) in einem gemeinsamen Verbindungsbereich (31) überlappen, wobei ein Durchbruch (30) in den Teilendstücken (18) beider Enden (10), die in einem gemeinsamen Verbindungsbereich (31) überlappend angeordnet sind, vorgesehen ist und die Teilendstücke (18) beider Enden (10) mittels des Durchbruchs (30) im gemeinsamen Verbindungsbereich (31) miteinander verbunden sind.

2. Wicklung nach Anspruch 1, wobei die Teilendstücke (18) des ersten Endes (10) eines Flachbandleiters (12) und die Teilendstücke (18) des zweiten Endes (10) eines zweiten Flachbandleiters (12) im gemeinsamen Verbindungsbereich (31) überlappend angeordnet sind, sodass jeweils zwischen zwei Teilendstücken (18) des ersten Endes (10) ein Teilendstück (18) des anderen Endes (10) angeordnet ist.

3. Wicklung nach Anspruch 1 oder 2, wobei die Teilendstücke (18) eines Endes (10) eines Flachbandleiters (12) gebogen sind, indem jedes Teilendstück (18) einen Biegewinkel von 180 Grad aufweist, und die Biegelinie (24) einen Winkel (25) größer 0 Grad gegenüber der Längsachse (26) aufweist, sodass sich der Verbindungsbereich (14, 28) vorzugsweise seitlich neben dem Flachbandleiter (12) befindet.

4. Wicklung nach Anspruch 3, wobei die Biegelinie (24) der Teilendstücke (18) einen 45-Grad-Winkel (25) zu einer Längsachse (26) der Teilendstücke (18) aufweist, sodass die Teilendstücke (18) in einem 90-Grad-Winkel (25) verlaufen.

5. Wicklung nach einem der vorhergehenden Ansprüche, wobei der Durchbruch (30) durch alle Teilendstücke (18) im gemeinsamen Verbindungsbereich (31) durch Bohren oder Stanzen hergestellt ist und die Teilendstücke (18) beider Enden (10) mit einer Schraube durch den Durchbruch (30) verschraubt sind.

6. Wicklung nach einem der vorhergehenden Ansprüche, wobei der Durchbruch (30) durch alle Teilendstücke (18) im gemeinsamen Verbindungsbereich (31) hergestellt wurde, indem die Teilendstücke (18) im gemeinsamen Verbindungsbereich (31) zumindest teilweise in Berührung miteinander gebracht wurden und ein rotierendes schneidloses Werkzeug im gemeinsamen Verbindungsbereich (31) durch alle zu verbindenden Teilendstücke (18) während der Rotation in axialer Richtung vorgeschoben wurde.

7. Windenergieanlagen-Generator mit mindestens einer Wicklung nach einem der Ansprüche 1 bis 6.

8. Verfahren zum Verbinden von zwei Enden (10) zweier Flachbandleiter (12), insbesondere zum Herstellen einer Wicklung nach einem der Ansprüche 1 bis 6, wobei die Verbindung durch folgende Schritte hergestellt wird:
- Einschneiden oder Einstanzen jedes Flachbandleiters (12) vom jeweiligen Ende (10) aus gesehen mindestens bis zu einer vordefinierten Länge (23) des Flachbandleiters (12) in Längsrichtung (20), sodass mindestens zwei Teilendstücke (18) des Flachbandleiters (12) entstehen, die jeweils eine gleiche Breite aufweisen
- Biegen der Teilendstücke (18) derart, dass sich die Teilendstücke (18) desselben Flachbandleiters (12) zumindest in einem Verbindungsbereich (28) überlappen,
- Anordnen der Verbindungsbereiche (28) zweier Enden (10) in einem gemeinsamen Verbindungsbereich (31) und
- Verbinden der Teilendstücke (18) im gemeinsamen Verbindungsbereich (31) mittels eines Durchbruchs (30), der in den Teilendstücken (18) beider Enden (10), die in dem gemeinsamen Verbindungsbereich (31) überlappend angeordnet sind, vorgesehen ist.

9. Verfahren nach Anspruch 8, wobei die Teilendstücke (18) des ersten Endes (10) eines Flachbandleiters (12) und die Teilendstücke (18) des zweiten Endes (10) eines zweiten Flachbandleiters (12) im gemeinsamen Verbindungsbereich (31) überlappend angeordnet werden, sodass jeweils zwischen zwei Teilendstücken (18) des ersten Endes (10) ein Teilendstück (18) des anderen Endes (10) angeordnet wird.

10. Verfahren nach Anspruch 8 oder 9, wobei die Teilendstücke (18) eines Endes (10) eines Flachbandleiters (12) gebogen werden, indem jedes Teilendstück (18) in einem Biegewinkel von 180 Grad gebogen wird, und die Biegelinie (24) einen Winkel (25) größer 0 Grad gegenüber der Längsachse (26) aufweist, sodass der Verbindungsbereich (28) vorzugsweise seitlich neben dem Flachbandleiter (12) gebildet wird.

11. Verfahren nach Anspruch 10, wobei die Biegelinie (24) der Teilendstücke (18) einen 45-Grad-Winkel (25) zu einer Längsachse (26) der Teilendstücke (18) aufweist, sodass die Teilendstücke (18) in einem 90-Grad-Winkel (25) verlaufen.

12. Verfahren nach einem der Ansprüche 8 bis 11, wobei der Durchbruch (30) durch alle Teilendstücke (18) im gemeinsamen Verbindungsbereich (31) durch Bohren oder Stanzen hergestellt wird und die Teilendstücke (18) beider Enden (10) mit einer Schraube durch den Durchbruch (30) verschraubt werden.

13. Verfahren nach einem der Ansprüche 8 bis 11, wobei der Durchbruch (30) durch die Teilendstücke (18) im gemeinsamen Verbindungsbereich (31) hergestellt wird, indem alle Teilendstücke (18) im gemeinsamen Verbindungsbereich (31) zumindest teilweise in Berührung miteinander gebracht werden und ein rotierendes schneidloses Werkzeug im gemeinsamen Verbindungsbereich (31) durch die zu verbindenden Teilendstücke (18) während der Rotation in axialer Richtung vorgeschoben wird.

## Claims

1. A winding of a generator (130) of a wind power installation (100), in particular of the rotor (134), wherein the winding comprises a plurality of coils which are each wound using a flat ribbon conductor (12), wherein the flat ribbon conductors (12) have in each case two ends (10), and at least two ends (10) of two flat ribbon conductors (12) are connected to one another by a connection,
**characterized in that**
the connection is established **in that** the flat ribbon conductors (12), in each case viewed from the respective end (10) are incised or punched at least up to a predefined length (23) of the flat ribbon conductor (12) in the longitudinal direction (20), such that at least two part-end pieces (18) of the flat ribbon conductor (12) which have in each case an identical width are created, and the part-end pieces (18) are bent in such a manner that the part-end pieces (18) of the same flat ribbon conductor (12) overlap at least in a connection region (28), wherein the connection regions (28) of the connected ends (10) overlap in a common connection region (31), wherein a breakthrough (30) is disposed in the part-end pieces (18) of both ends (10), provided overlapping in a common connection region (31), and the part-end pieces (18) of both ends (10) are connected to one another by means of the breakthrough (30) in the common connection region (31).

2. The winding as claimed in claim 1, wherein the part-end pieces (18) of the first end (10) of a flat ribbon conductor (12) and the part-end pieces (18) of the second end (10) of a second flat ribbon conductor (12) are disposed so as to overlap in the common connection region (31) such that a part-end piece (18) of the respective other end (10) is in each case disposed between two part-end pieces (18) of the first end (10).

3. The winding as claimed in claim 1 or 2, wherein the part-end pieces (18) of an end (10) of a flat ribbon conductor (12) are bent in that each part-end piece (18) has a bending angle of 180 degrees, and the bending line (24) in relation to the longitudinal axis (26) has an angle (25) of more than 0 degrees, such that the connection region (14, 28) is preferably located so as to be laterally next to the flat ribbon conductor (12).

4. The winding as claimed in claim 3, wherein the bending line (24) of the part-end pieces (18) in relation to a longitudinal axis (26) of the part-end pieces (18) has an angle (25) of 45 degrees such that the part-end pieces (18) run at an angle (25) of 90 degrees.

5. The winding as claimed in one of the preceding claims, wherein the breakthrough (30) through all part-end pieces (18) in the common connection region (31) is produced by drilling or punching, and the part-end pieces (18) of both ends (10) are screw-fitted by a screw through the breakthrough (30).

6. The winding as claimed in one of the preceding claims, wherein the breakthrough (30) through all part-end pieces (18) in the common connection region (31) has been produced in that the part-end pieces (18) in the common connection region (31) have at least partially been brought into mutual contact and a rotating bladeless tool has been advanced through all part-end pieces (18) to be connected in the common connection region (31) during the rotation in the axial direction.

7. A wind power installation generator having at least one winding as claimed in one of claims 1 to 6.

8. A method for connecting two ends (10) of two flat ribbon conductors (12), in particular for producing a winding as claimed in one of claims 1 to 6, wherein the connection is established by the following steps:
- incising or punching each flat ribbon conductor (12), when viewed from the respective end (10), at least up to a predefined length (23) of the flat ribbon conductor (12) in the longitudinal direction (20) such that at least two part-end pieces (18) of the flat ribbon conductor (12) which have in each case an identical width are created;
- bending the part-end pieces (18) in such a manner that the part-end pieces (18) of the same flat ribbon conductor (12) overlap at least in a connection region (28);
- disposing the connection regions (28) of two ends (10) in a common connection region (31); and
- connecting the part-end pieces (18) in the common connection region (31) by a breakthrough (30) disposed in the part-end pieces (18) of both ends (10), provided overlapping in the common connection region (31).

9. The method as claimed in claim 8, wherein the part-end pieces (18) of the first end (10) of a flat ribbon conductor (12) and the part-end pieces (18) of the second end (10) of a second flat ribbon conductor (12) are disposed so as to overlap in the common connection region (31) such that a part-end piece (18) of the respective other end (10) is in each case disposed between two part-end pieces (18) of the first end (10).

10. The method as claimed in claim 8 or 9, wherein the part-end pieces (18) of an end (10) of a flat ribbon conductor (12) are bent in that each part-end piece (18) is bent at a bending angle of 180 degrees, and the bending line (24) in relation to the longitudinal axis (26) has an angle (25) of more than 0 degrees such that the connection region (28) is preferably formed so as to be laterally next to the flat ribbon conductor (12).

11. The method as claimed in claim 10, wherein the bending line (24) of the part-end pieces (18) in relation to a longitudinal axis (26) of the part-end pieces (18) has an angle (25) of 45 degrees such that the part-end pieces (18) run at an angle (25) of 90 degrees.

12. The method as claimed in one of claims 8 to 11, wherein the breakthrough (30) through all part-end pieces (18) in the common connection region (31) is produced by drilling or punching, and the part-end pieces (18) of both ends (10) are screw-fitted by a screw through the breakthrough (30).

13. The method as claimed in one of claims 8 to 11, wherein the breakthrough (30) through all part-end pieces (18) in the common connection region (31) is produced in that all part-end pieces (18) in the common connection region (31) are at least partially brought into mutual contact and a rotating bladeless tool is advanced through the part-end pieces (18) to be connected in the common connection region (31) during the rotation in the axial direction.

## Revendications

1. Enroulement d'un générateur (130) d'une éolienne (100), en particulier du rotor (134), dans lequel l'enroulement comprend plusieurs bobines qui sont enroulées respectivement avec un conducteur plat (12), dans lequel les conducteurs plats (12) présentent respectivement deux extrémités (10) et au moins deux extrémités (10) de deux conducteurs plats (12) sont reliées l'une à l'autre par une liaison, **caractérisé en ce que** la liaison est générée **en ce que** les conducteurs plats (12), vus respectivement depuis l'extrémité (10) respective, sont coupés ou estampés dans le sens longitudinal (20) jusqu'à une longueur (23) prédéfinie du conducteur plat (12) de manière à former au moins deux pièces d'extrémité partielles (18) du conducteur plat (12), qui présentent respectivement une largeur égale, et les pièces d'extrémité partielles (18) sont cintrées de telle manière que les pièces d'extrémité partielles (18) du même conducteur plat (12) se chevauchent au moins dans une zone de liaison (28), dans lequel les zones de liaison (28) des extrémités (10) reliées se chevauchent dans une zone de liaison commune (31), dans lequel une perforation (30) est prévue dans les pièces d'extrémité partielles (18) des deux extrémités (10), qui sont disposées de manière à se chevaucher dans une zone de liaison commune (31), et les pièces d'extrémité partielles (18) des deux extrémités (10) sont reliées l'une à l'autre dans la zone de liaison commune (31) au moyen de la perforation (30).

2. Enroulement selon la revendication 1, dans lequel les pièces d'extrémité partielles (18) de la première extrémité (10) d'un conducteur plat (12) et les pièces d'extrémité partielles (18) de la seconde extrémité (10) d'un deuxième conducteur plat (12) sont disposées de manière à se chevaucher dans la zone de liaison commune (31) si bien qu'une pièce d'extrémité partielle (18) de l'autre extrémité (10) est disposée respectivement entre deux pièces d'extrémité partielles (18) de la première extrémité (10).

3. Enroulement selon la revendication 1 ou 2, dans lequel les pièces d'extrémité partielles (18) d'une extrémité (10) d'un conducteur plat (12) sont cintrées en ce que chaque pièce d'extrémité partielle (18) présente un angle de cintrage de 180 degrés, et la ligne de cintrage (24) présente un angle (25) supérieur à 0 degré par rapport à l'axe longitudinal (26) si bien que la zone de liaison (14, 28) se trouve de préférence latéralement à côté du conducteur plat (12).

4. Enroulement selon la revendication 3, dans lequel la ligne de cintrage (24) des pièces d'extrémité partielles (18) présente un angle de 45 degrés (25) par rapport à un axe longitudinal (26) des pièces d'extrémité partielles (18) si bien que les pièces d'extrémité partielles (18) s'étendent selon un angle de 90 degrés (25) .

5. Enroulement selon l'une quelconque des revendications précédentes, dans lequel la perforation (30) est fabriquée par perforation ou estampage à travers toutes les pièces d'extrémité partielles (18) dans la zone de liaison commune (31) et les pièces d'extrémité partielles (18) des deux extrémités (10) sont vissées par une vis à travers la perforation (30).

6. Enroulement selon l'une quelconque des revendications précédentes, dans lequel la perforation (30) a été fabriquée à travers toutes les pièces d'extrémité partielles (18) dans la zone de liaison commune (31) en ce que les pièces d'extrémité partielles (18) ont été amenées en contact les unes avec les autres au moins en partie dans la zone de liaison commune (31) et un outil sans lame rotatif a été poussé dans une direction axiale au cours de la rotation à travers toutes les pièces d'extrémité partielles (18) à relier dans la zone de liaison commune (31).

7. Générateur d'éolienne avec au moins un enroulement selon l'une quelconque des revendications 1 à 6.

8. Procédé pour lier deux extrémités (10) de deux conducteurs plats (12), en particulier pour fabriquer un enroulement selon l'une quelconque des revendications 1 à 6, dans lequel la liaison est fabriquée par des étapes suivantes :
- la coupe ou l'estampage de chaque conducteur plat (12) vus depuis l'extrémité (10) respective au moins jusqu'à une longueur (23) prédéfinie du conducteur plat (12) dans le sens longitudinal (20) de manière à former au moins deux pièces d'extrémité partielles (18) du conducteur plat (12), qui présentent respectivement une largeur identique,
- le cintrage des pièces d'extrémité partielles (18) de telle manière que les pièces d'extrémité partielles (18) du même conducteur plat (12) se chevauchent au moins dans une zone de liaison (28),
- la disposition des zones de liaison (28) de deux extrémités (10) dans une zone de liaison commune (31), et
- la liaison des pièces d'extrémité partielles (18) dans la zone de liaison commune (31) au moyen d'une perforation (30), qui est prévue dans les pièces d'extrémité partielles (18) de deux extrémités (10), qui sont disposées de manière à se chevaucher dans la zone de liaison commune (31).

9. Procédé selon la revendication 8, dans lequel les pièces d'extrémité partielles (18) de la première extrémité (10) d'un conducteur plat (12) et les pièces d'extrémité partielles (18) de la seconde extrémité (10) d'un deuxième conducteur plat (12) sont disposées de manière à se chevaucher dans une zone de liaison commune (31) si bien que respectivement une pièce d'extrémité partielle (18) de l'autre extrémité (10) est disposée respectivement entre deux pièces d'extrémité partielles (18) de la première extrémité (10).

10. Procédé selon la revendication 8 ou 9, dans lequel les pièces d'extrémité partielles (18) d'une extrémité (10) d'un conducteur plat (12) sont cintrées en ce que chaque pièce d'extrémité partielle (18) est cintrée selon un angle de cintrage de 180 degrés et la ligne de cintrage (24) présente un angle (25) supérieur à 0 degré par rapport à l'axe longitudinal (26) si bien que la zone de liaison (28) est formée de préférence latéralement à côté du conducteur plat (12).

11. Procédé selon la revendication 10, dans lequel la ligne de cintrage (24) des pièces d'extrémité partielle (18) présente un angle de 45 degrés (25) par rapport à un axe longitudinal (26) des pièces d'extrémité partielles (18) si bien que les pièces d'extrémité partielles (18) s'étendent selon un angle de 90 degrés (25) .

12. Procédé selon l'une quelconque des revendications 8 à 11, dans lequel la perforation (30) est fabriquée par perforation ou estampage dans la zone de liaison commune (31) à travers toutes les pièces d'extrémité partielles (18) et les pièces d'extrémité partielles (18) des deux extrémités (10) sont vissées par une vis à travers la perforation (30).

13. Procédé selon l'une quelconque des revendications 8 à 11, dans lequel la perforation (30) est fabriquée dans la zone de liaison commune (31) à travers les pièces d'extrémité partielles (18) en ce que toutes les pièces d'extrémité partielles (18) sont amenées en contact les unes avec les autres au moins en partie dans la zone de liaison commune (31) et un outil sans lame rotatif est poussé dans une direction axiale au cours de la rotation à travers les pièces d'extrémité partielles (18) à relier dans la zone de liaison commune (31) .
